# EUROPEAN PATENT SPECIFICATION

(11) **EP 3 715 057 B1**
(45) Date of publication and mention of the grant of the patent: **10.11.2021**
(21) Application number: 20165901.8
(22) Date of filing: 26.03.2020
(51) Int. Cl.: B25F 5/02

(54) **ELECTRIC POWER TOOL**
ELEKTRISCH BETRIEBENES WERKZEUG
OUTIL ÉLECTRIQUE

(30) Priority: 29.03.2019 JP 2019068217
(43) Date of publication of application: 30.09.2020
(73) Proprietor: Panasonic Intellectual Property Management Co., Ltd., Osaka-shi, Osaka 540-6207 (JP)
(72) Inventor: MURAMATSU, Masari, Osaka-shi, Osaka 540-6207 (JP)
(74) Representative: Müller-Boré & Partner Patentanwälte PartG mbB

(56) References cited:
- EP-A1- 2 998 074
- DE-U1- 20 105 767
- US-A1- 2002 054 798
- US-A1- 2007 065 246

## Description

### Technical Field

The present disclosure relates to an electric power tool, and more particularly relates to an electric power tool according to the preamble of claim 1, including a battery pack. Such an electric power tool is known from US 2007/065246 A1.

### Background Art

JP 2005-509535 A discloses a handheld tool with a removable object sensor. This tool includes a housing, a mounting member, and the object sensor removable from the mounting member. The tool further includes a tray used to contain useful objects. For example, a drill bit, a screw, and other parts similar to these may be contained in the tray.

### Summary of Invention

In the tool of JP 2005-509535 A, however, the drill bit is contained uncovered in the tray. Therefore, the drill bit is likely to fall off during machining when subjected to unexpected impact caused by collision with surrounding objects.

It is therefore an object of the present disclosure to provide an electric power tool that reduces the chances of the bit stored falling off from the tool.

The invention provides an electric power tool according to claim 1. The electric power tool includes a motor, a bit mounting portion, a body, a handle, a base, and a bit storage portion. The bit mounting portion may mount a bit thereon. The body houses the motor therein and includes the bit mounting portion. The handle is extended from the body. The base is provided for the handle. A battery pack is able to be attached to the base by allowing the battery pack to slide on the base. The bit storage portion may store the bit therein. The bit storage portion covers a space left between the base and the battery pack attached to the base. The bit stored in the bit storage portion is arranged to have its longitudinal axis aligned with a sliding direction in which the battery pack slides.

The present disclosure achieves the advantage of reducing the chances of the bit stored falling off from the tool.

### Brief Description of Drawings

FIG. 1 is a side view illustrating an exemplary embodiment of an electric power tool according to the present disclosure;
FIG. 2 is a front view illustrating the exemplary embodiment of the electric power tool according to the present disclosure;
FIG. 3 is a perspective view of the exemplary embodiment of the electric power tool according to the present disclosure as viewed from below the electric power tool;
FIG. 4 is a perspective view of a battery pack, illustrating the exemplary embodiment of the electric power tool according to the present disclosure;

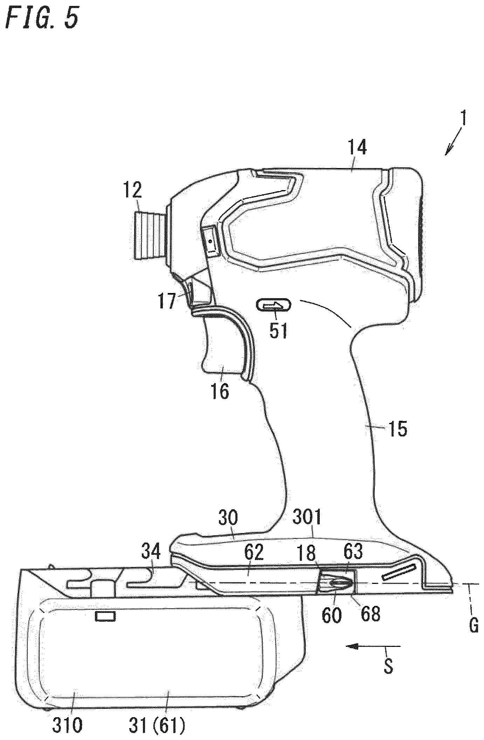

FIG. 5 is a side view illustrating the exemplary embodiment of the electric power tool according to the present disclosure; and

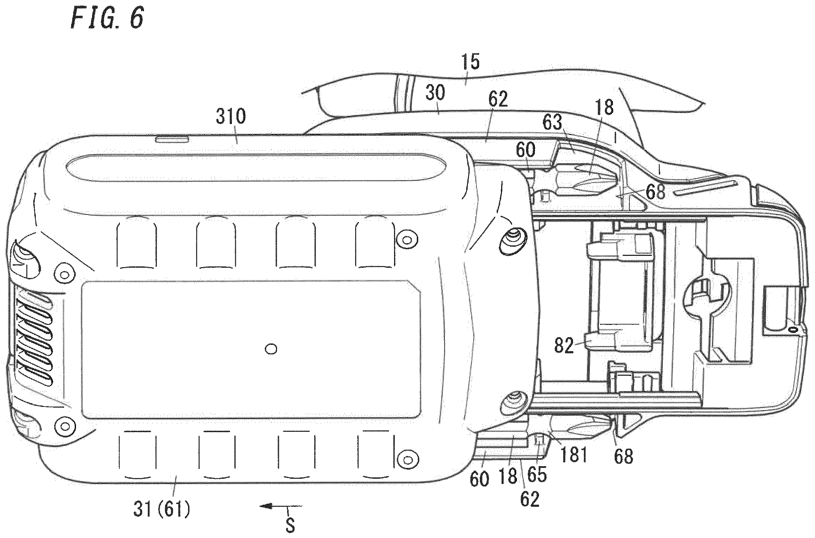

FIG. 6 is a perspective view of the exemplary embodiment of the electric power tool according to the present disclosure as viewed from below the electric power tool.

### Description of Embodiments

### (Embodiments)

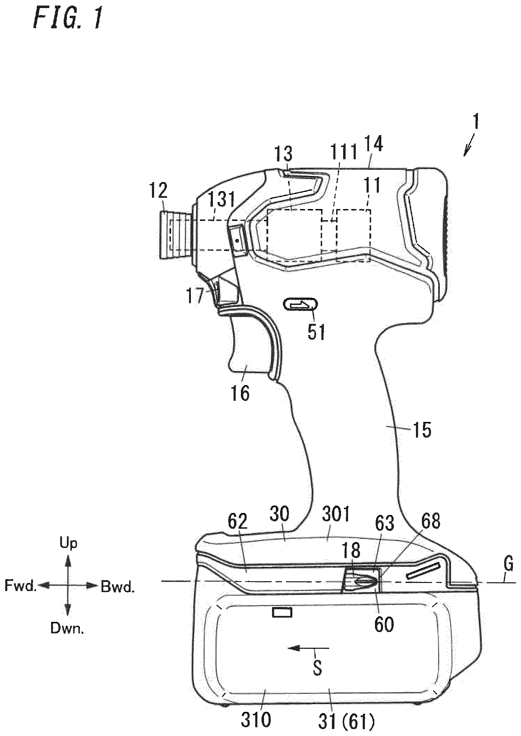

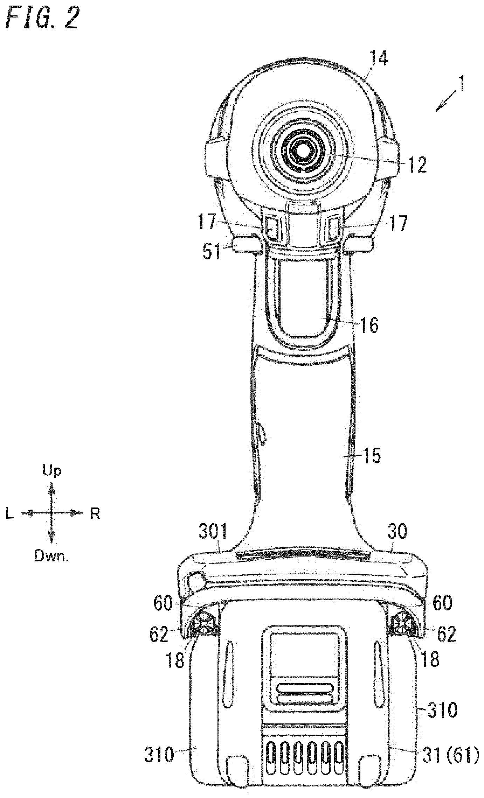

As shown in FIGS. 1 and 2, an electric power tool 1 according to an exemplary embodiment includes a motor 11, a bit mounting portion 12, a body 14, a handle 15, a base 30, and bit storage portions 60. That is to say, the motor 11, the body 14, the handle 15, the base 30, and the bit storage portions 60 are constituent elements of the electric power tool 1. The electric power tool 1 further includes a control unit for controlling the operation of the motor 11 and a power transmission mechanism 13.

A bit 18 may be mounted onto the bit mounting portion 12. That is to say, the electric power tool 1 according to this embodiment includes the bit mounting portion 12 to mount the bit (tip tool) 18 thereon. Examples of the bits 18 that may be mounted onto the bit mounting portion 12 include a driver bit, a tap, and drill bit. As a shaft 111 of the motor 11 rotates, the power transmission mechanism 13 is driven, which in turn causes an output shaft 131 to rotate. Then, as the output shaft 131 rotates, the bit mounting portion 12 also turns, which causes the tip tool (i.e., the bit 18) mounted onto the bit mounting portion 12 to rotate as well.

The body 14 houses the motor 11 therein and includes the bit mounting portion 12. That is to say, the motor 11 is housed in the body 14 and the bit mounting portion 12 is provided at the tip of the body 14. The body 14 is formed in the shape of a cylinder extending in a forward/backward direction. The body 14 houses the motor 11 and the power transmission mechanism 13 therein. That is to say, inside the body 14, arranged are the motor 11 and the power transmission mechanism 13 to be driven by battery cells of a battery pack 31.

The handle 15 is extended from the body 14. That is to say, the handle 15 is extended downward from the body 14. The handle 15 protrudes in an upward/downward direction from a lower part of a peripheral surface of the body 14.

The base 30 is provided for the handle 15. The battery pack 31 is attachable to the base 30 by allowing the battery pack 31 to slide on the base 30. That is to say, the electric power tool 1 according to this embodiment includes the base 30 at the bottom end of the handle 15. In addition, the base 30 is also configured such that the battery pack 31 is attachable to, and removable from, the base 30 by allowing the battery pack 31 to slide in the forward/backward direction. The base 30 is formed in the shape of a box with an open bottom. On the lower surface of the base 30, provided is a connector 81 to be connected to a communications connector 32 of the battery pack 31. In addition, on the lower surface of the base 30, also provided are terminal pieces 82 to be electrically connected to a terminal unit 33 of the battery pack 31. Furthermore, on the lower surface of the base 30, further provided are a plurality of coupling portions 80 to be hooked on engaging portions 34 of the battery pack 31.

As used herein, the "forward/backward direction" defined for the electric power tool 1 refers to the direction in which the shaft 111 of the motor 11 extends. Also, as used herein, the "upward/downward direction" refers herein to the direction perpendicular to the forward/backward direction and substantially aligned with the direction in which the handle 15 protrudes from the body 14. Furthermore, in the following description of embodiments, a direction defining the width of the electric power tool 1 perpendicularly to the forward/backward direction and the upward/downward direction will be hereinafter referred to as a "rightward/leftward direction."

The power transmission mechanism 13 is driven by the motor 11. That is to say, the power transmission mechanism 13 drives the tip tool in rotation by using the rotation of the motor 11. In other words, the power transmission mechanism 13 has a mechanism for transmitting the rotational driving force of the motor 11 to the output shaft 131. In the electric power tool 1 according to this embodiment, the power transmission mechanism 13 may include a reducer mechanism, a clutch mechanism, or an impact mechanism, for example. The power transmission mechanism 13 is coupled to the shaft 111 of the motor 11. In addition, the power transmission mechanism 13 is also coupled to the output shaft 131. The output shaft 131 is coupled to the bit mounting portion 12, which is exposed at the front end of the body 14.

A trigger switch 16 is arranged in front of an upper part of the handle 15. That is to say, the trigger switch 16 is provided for an upper front part of the handle 15. The trigger switch 16 accepts a manual operation of partially depressing the trigger switch 16 into the handle 15. The trigger switch 16 may be configured as a mechanical switch, for example. The trigger switch 16 opens and closes when subjected to the manual operation.

A forward/reverse switching unit 51 includes a slide switch, which may be operated by the user to change the direction of rotation of the motor 11 from a forward direction to a reverse direction, and vice versa. That is to say, the user is allowed to change the direction of rotation of the motor 11 by operating the forward/reverse switching unit 51. The forward/reverse switching unit 51 is provided for a lower part of the body 14 and located behind the trigger switch 16. The forward/reverse switching unit 51 is a movable switch, which is slidable in the rightward/leftward direction. Specifically, when the electric power tool 1 is viewed from the front, the forward/reverse switching unit 51 slides from a position where the forward/reverse switching unit 51 protrudes from one of the right and left side surfaces of the body 14 to a position where the forward/reverse switching unit 51 protrudes from the other side surface of the body 14.

A plurality of light emitters 17 are arranged between the trigger switch 16 and the body 14. That is to say, the plurality of light emitters 17 are interposed between the trigger switch 16 and the body 14. The plurality of light emitters 17 are located right over the trigger switch 16 and right under the body 14.

In the electric power tool 1 according to this embodiment, the battery pack 31 of a rechargeable type is attached to the lower surface of the base 30 so as to be readily removable from the base 30. The electric power tool 1 is powered by the battery pack 31. The battery pack 31 includes an assembled battery formed by connecting a plurality of secondary batteries (such as lithium-ion batteries) together in series, and a case that houses the assembled battery.

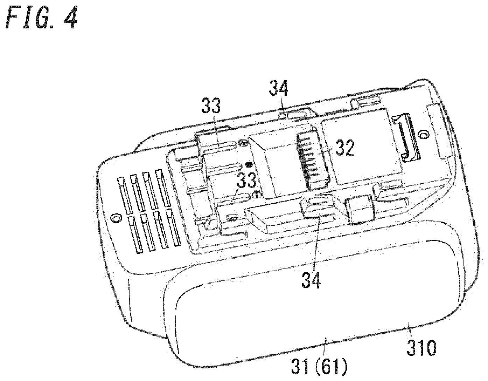

As shown in FIG. 4, the battery pack 31 includes a communications connector 32 for transmitting battery information about the battery pack 31. The communications connector 32 is electrically connected to the connector 81 provided on the lower surface of the base 30. Examples of the battery information include various pieces of information about the temperature, battery level, rated voltage, rated capacity, and number of times of use of the batteries. In addition, on the upper surface of the battery pack 31, further provided is the terminal unit 33 to be electrically connected to the terminal pieces 82 on the base 30. Furthermore, on the upper surface of the battery pack 31, provided are the plurality of engaging portions 34, which may be hooked on coupling portions 80 on the base 30. The battery pack 31 further includes a pair of bulging portions 310 bulging in the rightward/leftward direction.

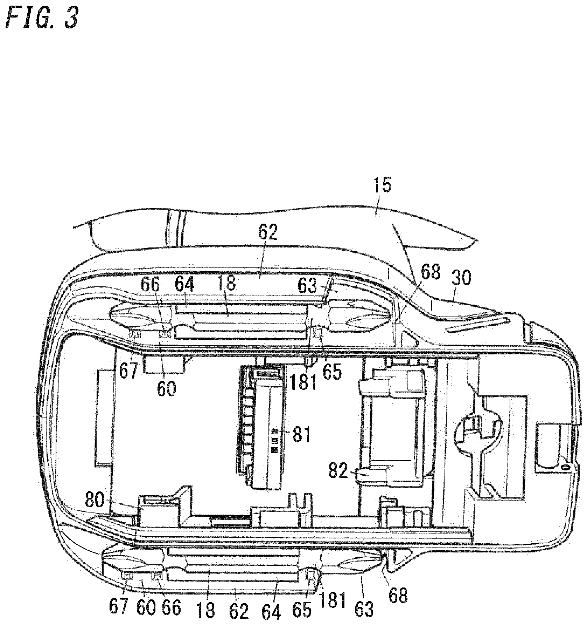

As shown in FIG. 3, the bit storage portions 60 may each store the bit 18. That is to say, the bit 18 that is attachable to, and removable from, the bit mounting portion 12 may be stored in one of the bit storage portions 60. That is to say, each of the bit storage portions 60 is a space, of which the volume is large enough to store the bit 18 therein. The dimension as measured in the forward/backward direction of each bit storage portion 60 is larger than the dimension measured along the longitudinal axis G of the bit 18. The dimension (width) as measured in the rightward/leftward direction of each bit storage portion 60 is larger than the diameter of the bit 18.

The electric power tool 1 according to this embodiment allows the bit 18 stored in any of the bit storage portions 60 to be removed out of the bit storage portion 60 from the base 30 toward the battery pack 31. That is to say, each bit storage portion 60 has one side, facing the base 30, closed and the other side, facing the battery pack 31, opened. In addition, with the battery pack 31 removed from the base 30, the bit 18 stored in any of the bit storage portions 60 is removed through the space where battery pack 31 is to be attached. Furthermore, with the battery pack 31 also removed from the base 30, the bit 18 is introduced and stored in any of the bit storage portions 60 through the spaced where battery pack 31 is to be attached. Each of the bit storage portions 60 has an open bottom, thus allowing the bit 18 to be introduced into the bit storage portion 60 from under the bit storage portion 60.

In the electric power tool 1 according to this embodiment, the bit storage portions 60 cover the space left between the base 30 and the battery pack 31 attached to the base 30. That is to say, the bit storage portions 60 are provided under the base 30. Also, when the battery pack 31 is attached to the base 30, the bit storage portions 60 are located over the battery pack 31. In particular, the bit storage portions 60 are located under protruding portions 301, which are right and left end portions of the base 30. The protruding portions 301 protrude to the right and to the left with respect to the handle 15. These protruding portions 301 are provided to cope with an increase in the size of a circuit board constituting a control unit built in the base 30. That is to say, as the functionality of the electric power tool 1 is improved, the circuit board of the control unit for controlling the electric power tool 1 needs to have its size increased due to an increase in the number of circuits integrated, for example. Thus, the protruding portions 301 are provided to house such a circuit board of an increased size. This allows the electric power tool 1 according to this embodiment to make effective use of the space left under the protruding portions 301. In addition, the bit storage portions 60 are also located over the bulging portions 310 of the battery pack 31 attached to the base 30.

In the electric power tool 1 according to this embodiment, the bit 18 stored in any of the bit storage portions 60 is arranged in the space between the base 30 and the battery pack 31 attached to the base 30. That is to say, the bit storage portions 60 store the bit(s) 18 between the base 30 and the battery pack 31. The space between the base 30 and the battery pack 31 attached to the base 30 has not been used in the art. The electric power tool 1 according to this embodiment makes effective use of that space by storing at least one bit 18 in the space.

In the electric power tool 1 according to this embodiment, the bit storage portions 60 are provided at both ends in the rightward/leftward direction. That is to say, in a front view of the electric power tool 1, the bit storage portions 60 are respectively provided on the left and right of the handle 15. This increases the space to make effective use of, compared to a situation where the bit storage portion 60 is provided on either side in the rightward/leftward direction. That is to say, this allows the electric power tool 1 to store the bits 18 on both sides in the rightward/leftward direction, thus increasing the storage efficiency of the bits 18.

In the electric power tool 1 according to this embodiment, the bits 18 are stored in the bit storage portions 60 such that their longitudinal axis G is aligned with the sliding direction S of the battery pack 31. That is to say, the bits 18 stored in the bit storage portions 60 have their longitudinal axis G aligned with the sliding direction S in which the battery pack 31 slides with respect to the base 30. When attached to, or removed from, the base 30, the battery pack 31 is made to slide in the forward/backward direction with respect to the base 30. Meanwhile, when stored in the bit storage portions 60, the bits 18 have their longitudinal axis G aligned with the forward/backward direction. This allows the user, just by sliding the battery pack 31 a little (by approximately a half) without removing the battery pack 31 from the base 30, to visually check whether or not there are any bits 18 stored and what type of bits 18 there are if any. That is to say, when the battery pack 31 is slid forward, the user is able to view the bits 18 stored from under the bit storage portions 60.

The electric power tool 1 according to this embodiment further includes a lid member 61 for the bit storage portions 60 such that the lid member 61 is movable in the sliding direction S of the battery pack 31. That is to say, the electric power tool 1 includes the lid member 61 to reduce the chances of the bits 18 falling off from the bit storage portions 60. This lid member 61 is movable in the same direction as the sliding direction S in which the battery pack 31 is moved when attached to, or removed from, the base 30. The sliding direction S varies according to the orientation of the electric power tool 1 but may normally be a horizontal direction.

In the electric power tool 1 according to this embodiment, the battery pack 31 attached to the base 30 serves as the lid member 61. That is to say, in the electric power tool 1, the battery pack 31 is used as the lid member 61. In other words, the battery pack 31 also serves as the lid member 61 that reduces the chances of the bits 18 falling off from the bit storage portions 60. This eliminates the need to provide a lid member separately from the battery pack 31, thus reducing the number of parts required. Under the bits 18 stored in the bit storage portions 60, located are the bulging portions 310 of the battery pack 31. When the battery pack 31 is attached to the lower surface of the base 30, the bulging portions 310 are located right under the bits 18 stored in the bit storage portions 60.

The electric power tool 1 according to this embodiment further includes a pair of cover pieces 62 outside of the bit storage portions 60. That is to say, the bit storage portions 60 have their respective side surfaces covered with the cover pieces 62. The cover pieces 62 decrease the impact to be applied to the bits 18 stored in the bit storage portions 60, thus reducing the chances of the bits 18 falling off from the bit storage portions 60. In other words, the cover pieces 62 protect the bits 18 stored in the bit storage portions 60 and reduce the chances of external impact being directly applied to the bits 18. Meanwhile, the front end of each bit storage portion 60 is not covered with the cover piece 62 but is open, thus allowing the user to view the inside of the bit storage portion 60 from the front of the electric power tool 1 and visually check whether or not there are any bits 18 there.

Each of the cover pieces 62 has a window 63, through which the bit 18 stored in its associated bit storage portion 60 is viewable. That is to say, each cover piece 62 has the window 63 that allows the user to visually check whether or not any bit 18 is stored in its associated bit storage portion 60. The window 63 may be formed by cutting out a portion of the cover piece 62. The window 63 formed as a cutout portion may be used as a portion allowing the user to put one of his or her fingers into the bit storage portion 60 when removing the bit 18 from the bit storage portion 60, thus facilitating the removal of the bit 18.

The electric power tool 1 according to this embodiment further includes a pair of holders 64 for holding the bits 18 in the bit storage portions 60. That is to say, each bit 18 is held in any of the bit storage portions 60 by its associated holder 64. Each holder 64 may be configured as a metallic leaf spring, for example. Each bit 18 is clamped by one of these holders 64 from both sides in a direction perpendicular to its longitudinal axis G. That is to say, the bit 18 is clamped by the holder 64 in the diametric direction. The bit 18 is held so firmly by the holder 64 in the bit storage portion 60 that the bit 18 tends to rattle much less often. In addition, having each bit 18 held firmly by one of the holders 64 in its associated bit storage portion 60 reduces the chances of the bit 18 falling off from the bit storage portion 60.

The electric power tool 1 according to this embodiment further includes two sets of hooks 65, 66, and 67 that reduce the chances of the bits 18 stored in the bit storage portions 60 moving in the sliding direction S of the battery pack 31. That is to say, providing these hooks 65-67 reduce the chances of the bits 18 stored in the bit storage portions 60 moving in the forward/backward direction. These hooks 65, 66, and 67 are arranged at regular intervals in the sliding direction S. Each set of the hooks 65, 66, and 67 is arranged along the outer peripheral surface of the bit 18 stored in their associated bit storage portion 60.

In the electric power tool 1 according to this embodiment, one hook 65 is caught on a constricted portion 181 of the bit 18 stored there. That is to say, one hook 65, out of the plurality of hooks 65-67, is caught on the constricted portion 181 of the bit 18. In that case, the bit 18 is a torsion bit with the constricted portion 181. The constricted portion 181 has a smaller diameter than, and is recessed with respect to, the rest of the bit 18. The hook 65 is formed in a U-shape that conforms to the outer peripheral shape of the constricted portion 181. The other hooks 66 and 67 are formed in such a shape (e.g., a hexagonal cross-sectional shape) that conforms to the outer peripheral shape of the rest of the bit 18 other than the constricted portion 181.

The electric power tool 1 according to this embodiment further includes a pair of wall portions 68, each of which reduces the chances of the bit 18 stored in its associated bit storage portion 60 bolting out of the bit storage portion 60 in the sliding direction S of the battery pack 31. Each wall portion 68 is located at the rear of its associated bit storage portion 60. That is to say, the wall portion 68 is arranged closer to the user who grips the handle 15 than the bit 18 stored in the bit storage portion 60 is. Thus, even if the bit 18 stored in any bit storage portion 60 moves backward, the bit 18 collides against the wall portion 68 and hardly bolts out of the bit storage portion 60, thus making this electric power tool 1 even handier to use.

### (Variations)

Note that the exemplary embodiment described above is only one of various embodiments of the present disclosure and should not be construed as limiting. Rather, the exemplary embodiment may be readily modified in various manners depending on a design choice or any other factor without departing from the scope of the present invention as defined by the claims.

In the embodiment described above, a leaf spring is used as each of the holders 64 for holding the bits 18. However, this is only an example and should not be construed as limiting. Rather, any other means may also be used as each holder 64 as long as the means is able to hold the bit 18 in its associated bit storage portion 60. For example, a magnet may be used as an alternative holder 64. In that case, even when the bit 18 has such a shape that does not allow the leaf spring to clamp the bit 18 easily, the bit 18 may also be held firmly in any of the bit storage portions 60 with magnetic force.

Also, the holders 64 may be made of any material. For example, the holders 64 may be made of a metallic material such as steel or may also be made of rubber or plastic.

Optionally, each of the bit storage portions 60 may have a volume large enough to store a plurality of bits 18 therein. If necessary, not only the bit 18 but also screws and other parts may be stored in each bit storage portion 60. Optionally, the bit storage portion 60 may be provided on only one side in the rightward/leftward direction.

### (Resume)

As can be seen from the foregoing description, an electric power tool (1) according to a first aspect includes a motor (11), a bit mounting portion (12), a body (14), a handle (15), a base (30), and a bit storage portion (60). The bit mounting portion (12) may mount a bit (18) thereon. The body (14) houses the motor (11) therein and includes the bit mounting portion (12). The handle (15) is extended from the body (14). The base (30) is provided for the handle (15). A battery pack (31) may be attached to the base (30) by allowing the battery pack (31) to slide on the base (30). The bit storage portion (60) may store the bit (18) therein. The bit storage portion (60) covers a space left between the base (30) and the battery pack (31) attached to the base (30). The bit (18) stored in the bit storage portion (60) is arranged to have its longitudinal axis (G) aligned with a sliding direction (S) in which the battery pack (31) slides.

According to this aspect, the bit (18) stored in the bit storage portion (60) is arranged between the base (30) and the battery pack (31). This reduces the chances of the bit (18) stored in the bit storage portion (60) being subjected to external impact and falling off from the tool (1).

In an electric power tool (1) according to a second aspect, which may be implemented in conjunction with the first aspect, the bit (18) stored in the bit storage portion (60) is arranged in the space left between the base (30) and the battery pack (31) attached to the base (30). The electric power tool (1) further includes a lid member (61) for the bit storage portion (60). The lid member (61) is movable in the sliding direction (S) in which the battery pack (31) slides.

According to this aspect, the user just needs to slide the lid member (61) a little to visually check whether or not any bit (18) is stored there. This reduces the chances of the bit (18) falling off from the tool (1) to collide against the user or cause chipping during the visual check.

In an electric power tool (1) according to a third aspect, which may be implemented in conjunction with the second aspect, the battery pack (31) attached to the base (30) serves as the lid member (61).

This aspect simplifies the structure, and reduces the number of parts, of the electric power tool (1) by having the battery pack (31) serve as the lid member (61) as well.

An electric power tool (1) according to a fourth aspect, which may be implemented in conjunction with any one of the first to third aspects, further includes a cover piece (62) provided outside of the bit storage portion (60). The cover piece (62) has a window (63), through which the bit (18) stored in the bit storage portion (60) is viewable.

This aspect makes the bit (18) stored in the bit storage portion (60) viewable for the user through the window (63), thus allowing him or her to more easily determine whether any bit (18) is stored there or not and what type of bit (18) is there if any.

In an electric power tool (1) according to a fifth aspect, which may be implemented in conjunction with any one of the first to fourth aspects, the bit (18) stored in the bit storage portion (60) is removed out of the bit storage portion (60) in a direction from the base (30) toward the battery pack (31).

This aspect allows the bit (18) stored in the bit storage portion (60) to be removed in the opposite direction from the base (30), thus making the bit (18) easily removable without being interfered with by the base (30).

An electric power tool (1) according to a sixth aspect, which may be implemented in conjunction with any one of the first to fifth aspects, further includes a holder (64) to hold the bit (18) in the bit storage portion (60).

This aspect reduces the chances of the bit (18) stored falling off from the electric power tool (1) by having the bit (18) held by the holder (64) in the bit storage portion (60).

An electric power tool (1) according to a seventh aspect, which may be implemented in conjunction with any one of the first to sixth aspects, further includes a hook (65-67) to reduce the chances of the bit (18) stored in the bit storage portion (60) moving in the sliding direction (S) in which the battery pack (31) slides.

This aspect reduces the chances of the bit (18) stored in the bit storage portion (60) falling off from the bit storage portion (60) by having the bit (18) caught in the hooks (65-67) and making the bit (18) hardly movable.

In an electric power tool (1) according to an eighth aspect, which may be implemented in conjunction with the seventh aspect, the hook (65) is caught on a constricted portion (181) of the bit (18).

This aspect reduces the chances of the bit (18) falling off from the bit storage portion (60) by providing the hook (65) to be caught on the constricted portion (181), which makes the bit (18) hardly movable in the sliding direction (S).

An electric power tool (1) according to a ninth aspect, which may be implemented in conjunction with any one of the first to eighth aspects, further includes a wall portion (68) to reduce the chances of the bit (18) stored in the bit storage portion (60) bolting out of the bit storage portion (60) in the sliding direction (S) in which the battery pack (31) slides.

This aspect makes this electric power tool (1) even handier to use by providing the wall portion (68) that reduces the chances of the bit (18) bolting out of the bit storage portion (60).

In an electric power tool (1) according to a tenth aspect, which may be implemented in conjunction with any one of the first to ninth aspects, the bit storage portion (60) is provided on each of two sides of the electric power tool (1) in a rightward/leftward direction.

This aspect allows an increased space to be used effectively.

### Reference Signs List

- 1: Electric Power Tool
- 11: Motor
- 12: Bit Mounting Portion
- 14: Body
- 15: Handle
- 18: Bit
- 181: Constricted Portion
- 31: Battery Pack
- 30: Base
- 60: Bit Storage Portion
- 61: Lid Member
- 62: Cover Piece
- 64: Holder
- 65: Hook
- 66: Hook
- 67: Hook
- 68: Wall Portion
- G: Longitudinal Axis
- S: Sliding Direction

## Claims

1. An electric power tool (1) comprising:
a motor (11);
a bit mounting portion (12) configured to mount a bit (18) thereon;
a body (14) housing the motor (11) therein and including the bit mounting portion (12);
a handle (15) extended from the body (14);
a base (30) which is provided for the handle (15) and which is configured such that a battery pack (31) for the electric power tool can be attached by allowing the battery pack (31) to slide on the base (30) in a sliding direction (S); and
a bit storage portion (60) configured to store the bit (18) therein;
the bit storage portion (60) covering a space left between the base (30) and the battery pack (31) attached to the base (30),
**characterized in that**
the electric power tool (1) is configured such that the bit (18) stored in the bit storage portion (60) is arranged to have its longitudinal axis (G) aligned with the sliding direction (S) in which the battery pack (31) slides on the base (30).

2. The electric power tool (1) of claim 1, wherein
the electric power tool (1) is configured such that the bit (18) stored in the bit storage portion (60) is arranged in the space left between the base (30) and the battery pack (31) attached to the base (30), and
the electric power tool (1) further includes a lid member (61) for the bit storage portion (60), the lid member (61) being configured to be movable in the sliding direction (S) in which the battery pack (31) slides.

3. The electric power tool (1) of claim 2, wherein
the battery pack (31) attached to the base (30) serves as the lid member (61).

4. The electric power tool (1) of any one of claims 1 to 3, further comprising a cover piece (62) provided outside of the bit storage portion (60),
the cover piece (62) having a window (63), through which the bit (18) stored in the bit storage portion (60) is viewable.

5. The electric power tool (1) of any one of claims 1 to 4, wherein
the electric power tool (1) is configured such that the bit (18) stored in the bit storage portion (60) is removed out of the bit storage portion (60) in a direction from the base (30) toward the battery pack (31).

6. The electric power tool (1) of any one of claims 1 to 5, further comprising a holder (64) configured to hold the bit (18) in the bit storage portion (60).

7. The electric power tool (1) of any one of claims 1 to 6, further comprising a hook (65-67) configured to reduce the chances of the bit (18) stored in the bit storage portion (60) moving in the sliding direction (S) in which the battery pack (31) slides.

8. The electric power tool (1) of claim 7, wherein
the hook (65) is configured to be caught on a constricted portion (181) of the bit (18).

9. The electric power tool (1) of any one of claims 1 to 8, further comprising a wall portion (68) configured to reduce the chances of the bit (18) stored in the bit storage portion (60) bolting out of the bit storage portion (60) in the sliding direction (S) in which the battery pack (31) slides.

10. The electric power tool (1) of any one of claims 1 to 9, wherein
the bit storage portion (60) is provided on each of two sides of the electric power tool (1) in a rightward/leftward direction.

## Patentansprüche

1. Elektrowerkzeug (1), umfassend:
einen Motor (11);
einen Bit-Montageabschnitt (12), der zum Montieren eines Bits (18) darauf konfiguriert ist;
einen Körper (14), der den Motor (11) in sich aufnimmt und den Bit-Montageabschnitt (12) enthält;
einen Griff (15), der sich von dem Körper (14) erstreckt;
eine Basis (30), die für den Griff (15) bereitgestellt und so konfiguriert ist, dass ein Batteriepack bzw. Akkusatz (31) für das Elektrowerkzeug angebracht werden kann, indem es dem Akkusatz (31) erlaubt ist, auf der Basis (30) in einer Gleitrichtung (S) zu gleiten; und
einen Bit-Aufbewahrungsabschnitt (60), der konfiguriert ist, das Bit (18) in sich aufzubewahren;
wobei der Bit-Aufbewahrungsabschnitt (60) einen Raum bedeckt, der zwischen der Basis (30) und dem an der Basis (30) angebrachten Akkusatz (31) verbleibt,
**dadurch gekennzeichnet, dass**
das Elektrowerkzeug (1) so konfiguriert ist, dass das in dem Bit-Aufbewahrungsabschnitt (60) aufbewahrte Bit (18) dahingehend angeordnet ist, dass seine Längsachse (G) mit der Gleitrichtung (S) ausgerichtet ist, in welcher der Akkusatz (31) auf der Basis (30) gleitet.

2. Elektrowerkzeug (1) nach Anspruch 1, wobei
das Elektrowerkzeug (1) so konfiguriert ist, dass das in dem Bit-Aufbewahrungsabschnitt (60) aufbewahrte Bit (18) in dem Raum angeordnet ist, der zwischen der Basis (30) und dem an der Basis (30) angebrachten Ackusatz (31) verbleibt, und
das Elektrowerkzeug (1) ferner ein Deckelglied (61) für den Bit-Aufbewahrungsabschnitt (60) enthält, wobei das Deckelglied (61) so konfiguriert ist, dass es in der Gleitrichtung (S) bewegbar ist, in welcher der Akkusatz (31) gleitet.

3. Elektrowerkzeug (1) nach Anspruch 2, wobei
der an der Basis (30) angebrachte Akkusatz (31) als das Deckglied (61) dient.

4. Elektrowerkzeug (1) nach einem der Ansprüche 1 bis 3, ferner umfassend ein Abdeckstück (62), das außerhalb des Bit-Aufbewahrungsabschnitts (60) bereitgestellt ist,
wobei das Abdeckstück (62) ein Fenster (63) aufweist, durch welches das in dem Bit-Aufbewahrungsabschnitt (60) aufbewahrte Bit (18) sichtbar ist.

5. Elektrowerkzeug (1) nach einem der Ansprüche 1 bis 4, wobei das Elektrowerkzeug (1) so konfiguriert ist, dass das in dem Bit-Aufbewahrungsabschnitt (60) aufbewahrte Bit (18) aus dem Bit-Aufbewahrungsabschnitt (60) in einer Richtung von der Basis (30) zu dem Ackusatz (31) entfernt wird.

6. Elektrowerkzeug (1) nach einem der Ansprüche 1 bis 5, ferner umfassend einen Halter (64), der konfiguriert ist, das Bit (18) in dem Bit-Aufbewahrungsabschnitt (60) zu halten.

7. Elektrowerkzeug (1) nach einem der Ansprüche 1 bis 6, ferner umfassend einen Haken (65-67), der konfiguriert ist, die Wahrscheinlichkeit zu verringern, dass sich das in dem Bit-Aufbewahrungsabschnitt (60) aufbewahrte Bit (18) in der Gleitrichtung (S) bewegt, in welcher der Akkusatz (31) gleitet.

8. Elektrowerkzeug (1) nach Anspruch 7, wobei
der Haken (65) konfiguriert ist, sich an einem verengten bzw. begrenzten Abschnitt (181) des Bits (18) zu verfangen.

9. Elektrowerkzeug (1) nach einem der Ansprüche 1 bis 8, ferner umfassend einen Wandabschnitt (68), der konfiguriert ist, die Wahrscheinlichkeit zu verringern, dass sich das in dem Bit-Aufbewahrungsabschnitt (60) aufbewahrte Bit (18) aus dem Bit-Aufbewahrungsabschnitt (60) in der Gleitrichtung (S) herausschraubt, in welcher der Akkusatz (31) gleitet.

10. Elektrowerkzeug (1) nach einem der Ansprüche 1 bis 9, wobei der Bit-Aufbewahrungsabschnitt (60) auf jeder von zwei Seiten des Elektrowerkzeugs (1) in einer Rechts/Links-Richtung bereitgestellt ist.

## Revendications

1. Outil électrique (1) comprenant :
un moteur (11) ;
une portion de montage de mèche (12) configurée pour monter une mèche (18) sur elle ;
un corps (14) hébergeant le moteur (11) en son sein et incluant la portion de montage de mèche (12) ;
une poignée (15) étendue depuis le corps (14) ;
une base (30) qui est prévue pour la poignée (15) et qui est configurée de sorte qu'un bloc-batterie (31) pour l'outil électrique peut être relié en permettant au bloc-batterie (31) de coulisser sur la base (30) dans une direction de coulissement (S) ; et
une portion de stockage de mèche (60) configurée pour stocker la mèche (18) en son sein;
la portion de stockage de mèche (60) recouvrant un espace laissé entre la base (30) et le bloc-batterie (31) relié à la base (30),
**caractérisé en ce que**
l'outil électrique (1) est configuré de sorte que la mèche (18) stockée dans la portion de stockage de mèche (60) est agencée pour avoir son axe longitudinal (G) aligné avec la direction de coulissement (S) dans laquelle le bloc-batterie (31) coulisse sur la base (30).

2. Outil électrique (1) selon la revendication 1, dans lequel l'outil électrique (1) est configuré de sorte que la mèche (18) stockée dans la portion de stockage de mèche (60) est agencée dans l'espace laissé entre la base (30) et le bloc-batterie (31) relié à la base (30), et
l'outil électrique (1) inclut en outre un élément de couvercle (61) pour la portion de stockage de mèche (60), l'élément de couvercle (61) étant configuré pour être mobile dans la direction de coulissement (S) dans laquelle le bloc-batterie (31) coulisse.

3. Outil électrique (1) selon la revendication 2, dans lequel le bloc-batterie (31) relié à base (30) sert d'élément de couvercle (61).

4. Outil électrique (1) selon l'une quelconque des revendications 1 à 3, comprenant en outre une pièce de recouvrement (62) prévue en dehors de la portion de stockage de mèche (60),
la pièce de recouvrement (62) ayant une fenêtre (63) à travers laquelle la mèche (18) stockée dans la portion de stockage de mèche (60) peut être visualisée.

5. Outil électrique (1) selon l'une quelconque des revendications 1 à 4, dans lequel l'outil électrique (1) est configuré de sorte que la mèche (18) stockée dans la portion de stockage de mèche (60) est extraite de la portion de stockage de mèche (60) dans une direction de la base (30) vers le bloc-batterie (31).

6. Outil électrique (1) selon l'une quelconque des revendications 1 à 5, comprenant en outre un support (64) configuré pour maintenir la mèche (18) dans la portion de stockage de mèche (60).

7. Outil électrique (1) selon l'une quelconque des revendications 1 à 6, comprenant en outre un crochet (65 à 67) configuré pour réduire les chances de la mèche (18) stockée dans la portion de stockage de mèche (60) de se déplacer dans la direction de coulissement (S) dans laquelle le bloc-batterie (31) coulisse.

8. Outil électrique (1) selon la revendication 7, dans lequel
le crochet (65) est configuré pour être accroché sur une portion serrée (181) de la mèche (18).

9. Outil électrique (1) selon l'une quelconque des revendications 1 à 8, comprenant en outre une portion de paroi (68) configurée pour réduire les chances de la mèche (18) stockée dans la portion de stockage de mèche (60) de tomber de la portion de stockage de mèche (60) dans la direction de coulissement (S) dans laquelle le bloc-batterie (31) coulisse.

10. Outil électrique (1) selon l'une quelconque des revendications 1 à 9, dans lequel la portion de stockage de mèche (60) est prévue sur chacun de deux côtés de l'outil électrique (1) dans une direction droite/gauche.
